# EUROPEAN PATENT APPLICATION

(11) **EP 4 730 572 A1**
(43) Date of publication of application: **22.04.2026**
(21) Application number: 25803839.7
(22) Date of filing: 13.05.2025
(51) Int. Cl.: H01R 13/527, H01R 13/52, H01R 13/04, H01M 10/42, H01M 10/48, A62C 3/16, A62D 1/00

(54) **CONNECTOR AND BATTERY PACK INCLUDING SAME**

(30) Priority: 17.05.2024 KR 20240064549
(71) Applicant: LG Energy Solution, Ltd., Seoul 07335 (KR)
(72) Inventor: HWANG, Sung Tack, Daejeon 34122 (KR)
(74) Representative: Hoffmann Eitle
(86) International application number: PCT/KR2025/006445
(87) International publication number: WO 2025/239641

(57) **Abstract**

The technical idea of the present invention is to provide a battery pack comprising: a pack frame on which battery cells are mounted; a sensor disposed in the pack frame; and a connector connected to the sensor. The connector comprises: a housing including a first cavity, a first injection hole communicating with the first cavity, and a pin accommodation space separated from the first cavity; a first fire extinguishing layer provided in the first cavity of the housing and containing a fire extinguishing agent; a first cover closing the first injection hole of the housing; and a conductive pin accommodated in the pin accommodation space of the housing and configured to electrically connect the sensor and an external device.

## Description

This application claims the benefit of Korean Patent Application No. 10-2024-0064549, filed on May 17, 2024, the disclosure of which is incorporated herein by reference.

### [Technical Field]

The present disclosure relates to a connector and a battery pack including the same.

### [Background]

Unlike primary batteries, secondary batteries can be charged and discharged a plurality of times. Secondary batteries are widely used as energy sources for various wireless devices such as handsets, laptops, and cordless vacuum cleaners. Recently, due to improvements in energy density and economies of scale, the manufacturing cost per unit capacity of secondary batteries has decreased dramatically. As the range of battery electric vehicles (BEVs) has increased to levels comparable to fuel vehicles, the primary use of secondary batteries is shifting from mobile devices to mobility.

As secondary batteries are used in mobility applications, the demand for their safety has increased. If accidents such as fires occur in secondary batteries used in mobility, they can endanger the life of the driver. Therefore, research on technologies to enhance the safety of secondary batteries is indispensable.

### [Summary]

### [Technical Problem]

The technical objective of the present disclosure is to provide a connector and a battery pack including the same.

### [Technical Solution]

To solve the aforementioned problems, the technical concept of the present disclosure provides a connector including: a housing including a first cavity, a first nozzle communicating with the first cavity, and a pin accommodation space separated from the first cavity; a first fire extinguishing layer provided within the first cavity of the housing and containing a fire extinguishing agent; a first cover closing the first nozzle of the housing; and a conductive pin accommodated in the pin accommodation space of the housing.

In exemplary embodiments, the housing includes an inner surface facing the conductive pin and an outer surface opposite the inner surface, wherein the first nozzle of the housing is provided on the outer surface of the housing.

In exemplary embodiments, the first nozzle of the housing is provided on the inner surface of the housing facing the conductive pin.

In exemplary embodiments, the housing further includes a second nozzle communicating with the first cavity of the housing, wherein the first nozzle is provided on the outer surface of the housing, wherein the second nozzle is provided on the inner surface of the housing, wherein the connector further includes a second cover closing the second nozzle of the housing.

In exemplary embodiments, the housing includes a second cavity and a second nozzle communicating with the second cavity, wherein the first nozzle is provided on the outer surface of the housing, wherein the second nozzle is provided on the inner surface of the housing, wherein the connector further includes: a second fire extinguishing layer provided within the second cavity of the housing and containing a fire extinguishing agent; and a second cover closing the second nozzle of the housing.

In exemplary embodiments, the housing includes a through hole communicating with the pin accommodation space, wherein the conductive pin is inserted into the through hole of the housing.

In exemplary embodiments, the housing includes a flame-retardant material, wherein the first cover includes a fire-resistant material.

In exemplary embodiments, the first cover includes fire-resistant silicone.

To solve the aforementioned problems, the technical concept of the present disclosure provides a battery pack including: a pack frame in which battery cells are mounted; a sensor disposed within the pack frame; and a connector connected to the sensor, wherein the connector includes: a housing including a first cavity, a first nozzle communicating with the first cavity, and a pin accommodation space separated from the first cavity; a first fire extinguishing layer provided within the first cavity of the housing and containing a fire extinguishing agent; a first cover closing the first nozzle of the housing; and a conductive pin accommodated in the pin accommodation space of the housing and configured to electrically connect the sensor and an external device.

In exemplary embodiments, the sensor includes a fire detection sensor.

In exemplary embodiments, the housing includes an inner surface facing the conductive pin and an outer surface opposite the inner surface, wherein the first nozzle of the housing is provided on the outer surface of the housing.

In exemplary embodiments, the first nozzle of the housing is provided on the inner surface of the housing facing the conductive pin.

In exemplary embodiments, the housing further includes a second nozzle communicating with the first cavity of the housing, wherein the first nozzle is provided on the outer surface of the housing, wherein the second nozzle is provided on the inner surface of the housing, wherein the connector further includes a second cover closing the second nozzle of the housing.

In exemplary embodiments, the housing includes a second cavity and a second nozzle communicating with the second cavity, wherein the first nozzle is provided on the outer surface of the housing, wherein the second nozzle is provided on the inner surface of the housing, wherein the connector further includes: a second fire extinguishing layer provided within the second cavity of the housing and containing a fire extinguishing agent; and a second cover closing the second nozzle of the housing.

In exemplary embodiments, the housing includes a flame-retardant material, wherein the first cover includes a fire-resistant material.

### [Advantageous Effects]

According to exemplary embodiments of the present disclosure, a fire extinguishing agent may be provided within a connector that forms a signal transmission path for transmitting a signal output from a fire detection sensor to an external device. When a fire occurs inside a battery pack, the fire extinguishing agent provided within the housing of the connector can be sprayed outward, delaying the spread of flames and the resulting damage to the housing of the connector. This ensures a minimum amount of time is available to transmit the signal output from the fire detection sensor to an external device.

The effects that can be obtained from the exemplary embodiments of the present disclosure are not limited to the effects mentioned above, and other effects not mentioned can be clearly derived and understood by one having ordinary knowledge in the technical field to which the exemplary embodiments of the present disclosure belong from the following description. In other words, unintended effects of practicing the exemplary embodiments of the present disclosure can also be derived from the exemplary embodiments of the present disclosure by one having ordinary knowledge in the technical field.

### [Brief Description of the Drawings]

FIG. 1 is a perspective view showing a connector according to exemplary embodiments of the present disclosure.
FIG. 2 is a cross-sectional view showing a connector according to exemplary embodiments of the present disclosure.
FIG. 3 is a cross-sectional view schematically illustrating a fire extinguishing operation of the connector in response to flame generation.
FIG. 4 is a cross-sectional view showing a connector according to exemplary embodiments of the present disclosure.
FIG. 5 is a cross-sectional view schematically illustrating a fire extinguishing operation of the connector upon flame generation.
FIG. 6 is a cross-sectional view showing a connector according to exemplary embodiments of the present disclosure.
FIG. 7 is a cross-sectional view schematically illustrating a fire extinguishing operation of the connector upon flame generation.
FIG. 8 is a cross-sectional view showing a connector according to exemplary embodiments of the present disclosure.
FIG. 9 is a cross-sectional view schematically illustrating a fire extinguishing operation of the connector upon flame generation.
FIG. 10 is a plan view schematically showing a battery pack according to exemplary embodiments of the present disclosure.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### (First embodiment)

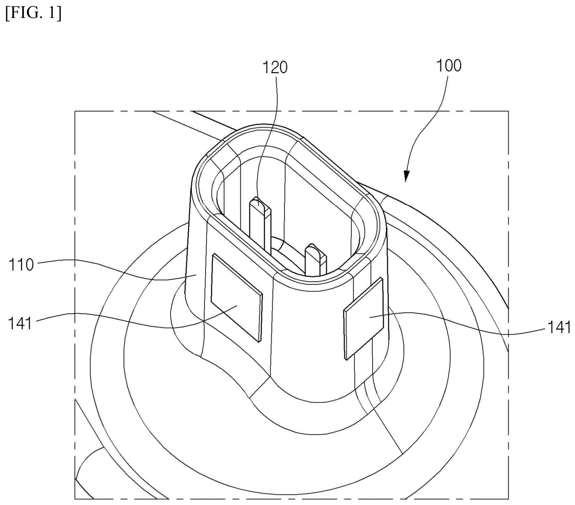

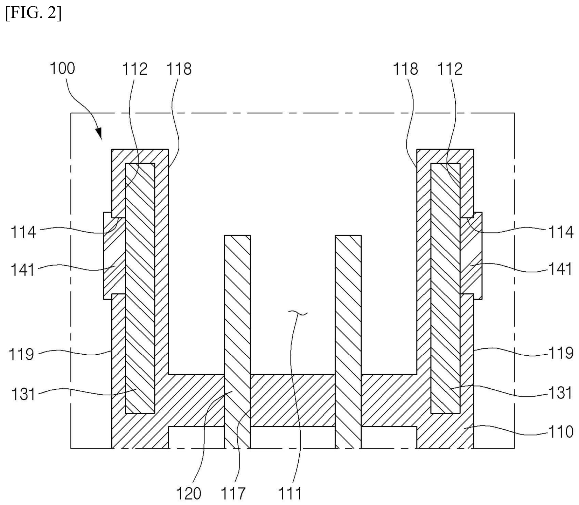

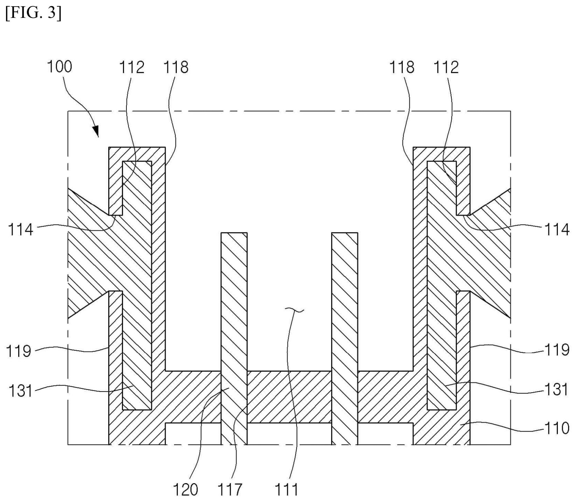

FIG. 1 is a perspective view showing a connector 100 according to exemplary embodiments of the present disclosure. FIG. 2 is a cross-sectional view showing a connector 100 according to exemplary embodiments of the present disclosure. FIG. 3 is a cross-sectional view schematically showing the fire extinguishing operation of the connector 100 in response to flame generation.

Referring to FIGS. 1 through 3, the connector 100 may include a housing 110, a conductive pin 120, a first fire extinguishing layer 131, and a first cover 141.

The housing 110 may support the conductive pin 120. The conductive pin 120 supported by the housing 110 may be connected to a component. As a pin of an external connector connected to an external device physically contacts the conductive pin 120, an electrical connection can be established between the component connected to the conductive pin 120 and the external device connected to the pin of the external connector .

The housing 110 may include a pin accommodation space 111 accommodating the conductive pin 120 and a through hole 117 communicating with the pin accommodation space 111. The housing 110 may include an inner surface 118 defining the pin accommodation space 111 and an outer surface 119 opposite the inner surface 118. The conductive pin 120 is inserted into the through hole 117 of the housing 110, and a portion of the conductive pin 120 may be accommodated within the pin accommodation space 111 of the housing 110. An external connector connected to an external device can be inserted into the pin accommodation space 111 of the housing 110 through one side of the pin accommodation space 111 exposed externally.

The housing 110 may include a first cavity 112 accommodating a first fire extinguishing layer 131 and a first nozzle 114 communicating with the first cavity 112. The first cavity 112 of the housing 110 is a space provided within the housing 110, and the first cavity 112 of the housing 110 and the pin accommodation space 111 of the housing 110 may be separated from each other. In exemplary embodiments, the first nozzle 114 of the housing 110 may be provided on an outer surface 119 of the housing 110.

The housing 110 may include a flame-retardant material. The flame-retardant material may include halogen-based flame retardants, phosphorus-based flame retardants, nitrogen-based flame retardants, and/or inorganic compound flame retardants. For example, the housing 110 may be formed from flame-retardant plastic.

The first fire extinguishing layer 131 may at least partially fill the first cavity 112 of the housing 110. The first fire extinguishing layer 131 may contain a fire extinguishing agent having a fire extinguishing effect. The first fire extinguishing layer 131 may be spaced apart from a conductive pin 120 inserted into a through hole 117 of the housing 110. The fire extinguishing agent may be injected into the first cavity 112 of the housing 110 through the first nozzle 114 of the housing 110.

In exemplary embodiments, the fire extinguishing agent may include a powder fire extinguishing agent and/or a liquid fire extinguishing agent. The powder fire extinguishing agent may include a Class I fire extinguishing powder having sodium bicarbonate (NaHCO₃) as its main component, a Class II fire extinguishing powder having potassium bicarbonate (KHCO₃) as its main component, a Class III fire extinguishing powder having ammonium phosphate (NH₄H₂PO₄) as its main component, and a Class IV fire extinguishing powder having a reaction product of potassium bicarbonate and urea as its main component. For example, liquid fire extinguishing agents may include sodium bicarbonate, ammonium phosphate, surfactants, and antifreeze.

In exemplary embodiments, the housing 110 may include a plurality of first cavities 112 and a plurality of first nozzles 114. The plurality of first cavities 112 may each communicate with one or more first nozzles 114, and a first fire extinguishing layer 131 may be provided in each of the plurality of first cavities 112 of the housing 110.

A first cover 141 may be attached to an outer surface 119 of the housing 110 and may close the first nozzle 114 of the housing 110. As the first cover 141 closes the first nozzle 114 of the housing 110, the first fire extinguishing layer 131 accommodated in the first cavity 112 of the housing 110 may not be exposed to the exterior of the housing 110. After injecting a fire extinguishing agent into the first cavity 112 of the housing 110 through the first nozzle 114 of the housing 110 to form the first fire extinguishing layer 131, a first cover 141 may be attached to the housing 110 to close the first nozzle 114 of the housing 110. To form the first cover 141, a fire-resistant material may be applied to the surface of the housing 110, or a member made of a fire-resistant material may be attached to the housing 110.

The first cover 141 may include a fire-resistant material. The fire-resistant material may include at least one selected from alumina, silica, magnesia, and chromium. For example, the first cover 141 may be formed from fire-resistant silicone.

As shown in FIG. 3, when a flame occurs around the connector 100, the first cover 141 formed of the fire-resistant material is removed by the flame, opening the first nozzle 114 of the housing 110, allowing the fire extinguishing agent contained within the first fire extinguishing layer 131 to be sprayed around the connector 100 through the first nozzle 114 of the housing 110. Since the first nozzle 114 of the housing 110 is provided on the outer surface 119 of the housing 110, upon flame occurrence, the fire extinguishing agent contained within the first fire extinguishing layer 131 can be sprayed outward from the connector 100. When a flame occurs around the connector 100, the fire extinguishing agent sprayed outside the connector 100 can delay the spread of the flame and the damage to the housing 110 caused by the flame.

### (Second embodiment)

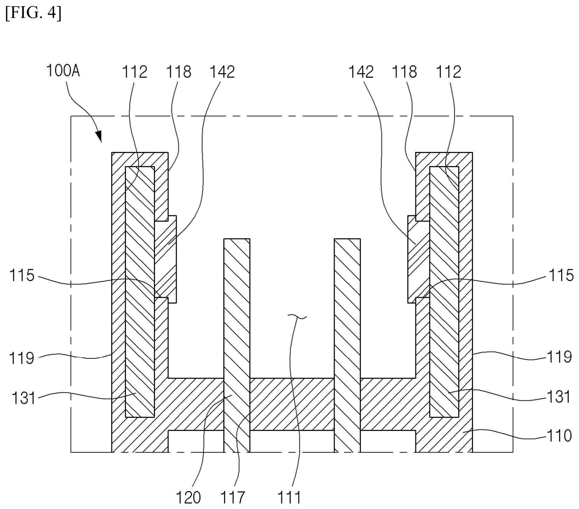

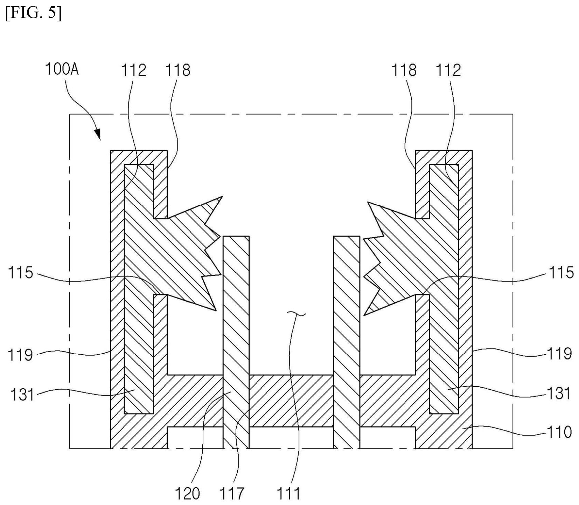

FIG. 4 is a cross-sectional view showing a connector 100A according to exemplary embodiments of the present disclosure. FIG. 5 is a cross-sectional view schematically showing the fire extinguishing operation of the connector 100A in response to a flame generation. Hereinafter, the connector 100A shown in FIGS. 4 and 5 will be described, focusing on the differences from the connector 100 described with reference to FIGS. 1 to 3.

Referring to FIGS. 4 and 5, the housing 110 may include a second nozzle 115 communicating with the first cavity 112. The second nozzle 115 of the housing 110 may be provided on the outer surface 119 of the housing 110.

The connector 100A may include a second cover 142 that closes the second nozzle 115 of the housing 110. The second cover 142 may be attached to the inner surface 118 of the housing 110 to close the second nozzle 115 of the housing 110 and may be exposed to the pin accommodation space 111 of the housing 110. As the second cover 142 closes the second nozzle 115 of the housing 110, the first fire extinguishing layer 131 accommodated within the first cavity 112 of the housing 110 may not be exposed to the pin accommodation space 111 of the housing 110. The material of the second cover 142 may be substantially the same as the material of the first cover 141 described with reference to FIGS. 1 through 3.

As shown in FIG. 5, when a flame is generated in the pin accommodation space 111 of the housing 110, the flame removes the second cover 142, opening the second nozzle 115 of the housing 110, and allowing the fire extinguishing agent contained in the first fire extinguishing layer 131 to be sprayed through the second nozzle 115 of the housing 110 into the pin accommodation space 111 of the housing 110. Since the second nozzle 115 of the housing 110 is provided on the inner surface 118 of the housing 110, upon flame occurrence, the fire extinguishing agent contained in the first fire extinguishing layer 131 can be sprayed into the pin accommodation space 111 of the housing 110. For example, a flame may be generated in the pin accommodation space 111 of the housing 110 due to an electrical short between the conductive pin 120 and a pin of an external connector connected to an external device. When a flame occurs in the pin accommodation space 111 of the housing 110, the fire extinguishing agent sprayed into the pin accommodation space 111 of the housing 110 can delay the spread of the flame and the damage to the housing 110 caused by the flame.

### (Third embodiment)

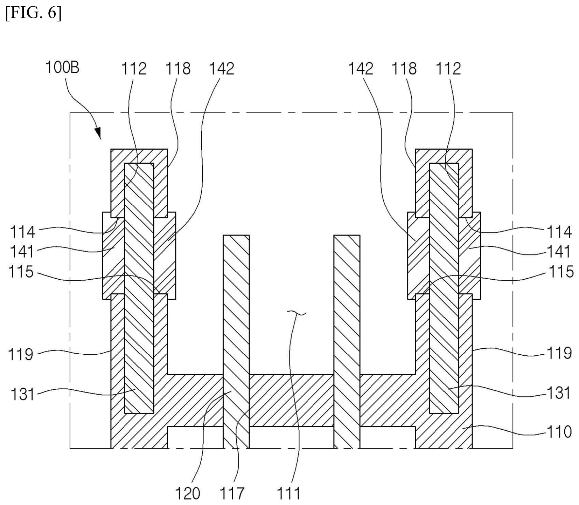

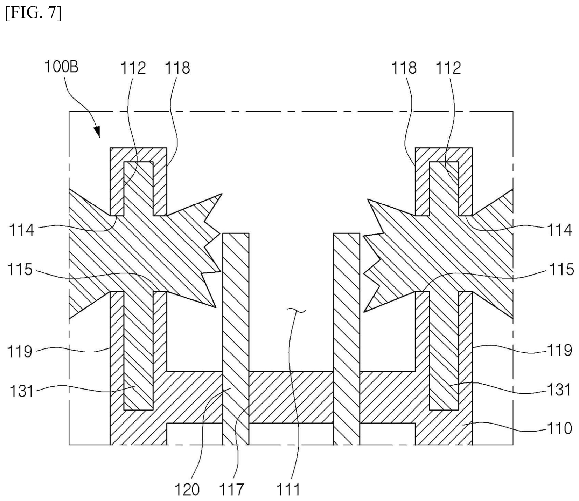

FIG. 6 is a cross-sectional view showing a connector 100B according to exemplary embodiments of the present disclosure. FIG. 7 is a cross-sectional view schematically showing the fire extinguishing operation of the connector 100B in response to flame generation. Hereinafter, descriptions overlapping with those previously explained are omitted or simplified.

Referring to FIGS. 6 and 7, the housing 110 includes a first nozzle 114 provided on an outer surface 119 of the housing 110 and a second nozzle 115 provided on an inner surface 118 of the housing 110. In exemplary embodiments, the first nozzle 114 and the second nozzle 115 of the housing 110 may communicate with the same first cavity 112 provided in the housing 110. The connector 100B may include a first cover 141 that closes the first nozzle 114 of the housing 110 and a second cover 142 that closes the second nozzle 115 of the housing 110.

As shown in FIG. 7, when a flame occurs around the connector 100B, the flame removes the first cover 141 and the second cover 142, opening the first nozzle 114 and the second nozzle 115 of the housing 110, and the fire extinguishing agent contained in the first fire extinguishing layer 131 can be sprayed through the first nozzle 114 and the second nozzle 115 of the housing 110 into the periphery of the housing 110 and the pin accommodation space 111 of the housing 110. When a flame occurs around the connector 100B, the fire extinguishing agent contained in the first fire extinguishing layer 131 is sprayed into the peripheral area of the housing 110 and the pin accommodation space 111 of the housing 110, thereby delaying the spread of the flame and the damage to the housing 110 caused by the flame.

### (Fourth embodiment)

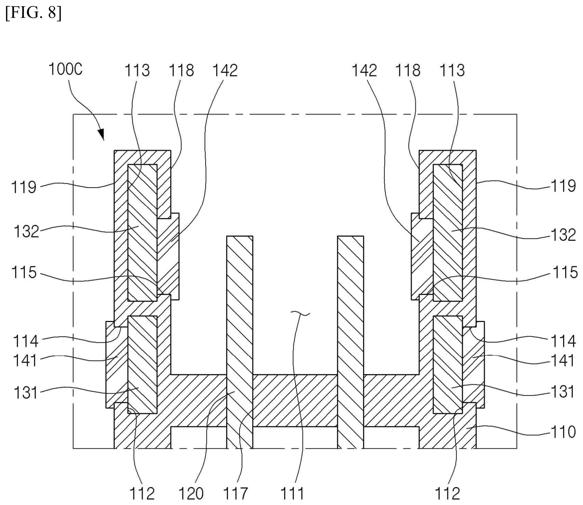

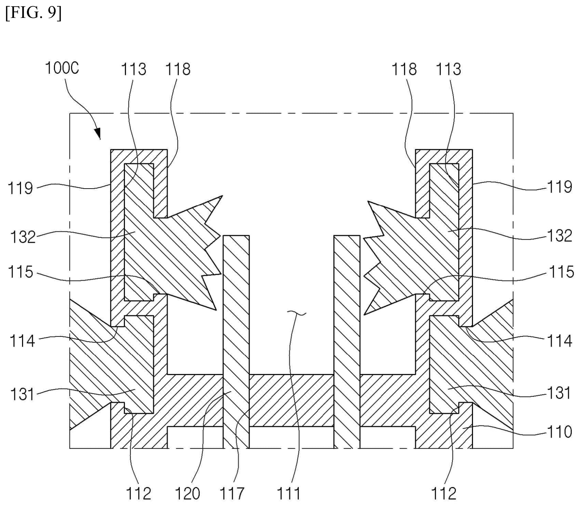

FIG. 8 is a cross-sectional view showing a connector 100C according to exemplary embodiments of the present disclosure. FIG. 9 is a cross-sectional view schematically showing the fire extinguishing operation of the connector 100C upon flame occurrence. Hereinafter, descriptions overlapping with the foregoing are omitted or simplified.

Referring to FIGS. 8 and 9, the housing 110 may include a first cavity 112, a second cavity 113, a first nozzle 114 communicating with the first cavity 112, and a second nozzle 115 communicating with the second cavity 113. The first nozzle 114 may be provided on an outer surface 119 of the housing 110, and the second nozzle 115 may be provided on an inner surface 118 of the housing 110. The connector 100C may include a first fire extinguishing layer 131 provided within the first cavity 112 of the housing 110, a second fire extinguishing layer 132 provided within the second cavity 113 of the housing 110, a first cover 141 closing the first nozzle 114 of the housing 110, and a second cover 142 closing the second nozzle 115 of the housing 110. The fire extinguishing agent of the second fire extinguishing layer 132 may be the same as or different from the fire extinguishing agent of the first fire extinguishing layer 131. The first cavity 112 and the second cavity 113 may be separated from each other, and the first fire extinguishing layer and the second fire extinguishing layer 132 may be separated from each other.

As shown in FIG. 9, when a flame occurs around the connector 100C, the flame removes the first cover 141 and the second cover 142, exposing the first nozzle 114 and the second nozzle 115 of the housing 110, allowing the fire extinguishing agent contained in the first fire extinguishing layer 131 to be sprayed through the first nozzle 114 of the housing 110 into the surrounding area of the housing 110, and the fire extinguishing agent contained in the second fire extinguishing layer 132 to be sprayed into the pin accommodation space 111 of the housing 110. When a flame occurs around the connector 100C, the fire extinguishing agent contained in the first fire extinguishing layer 131 is sprayed into the peripheral area of the housing 110, and the fire extinguishing agent contained in the second fire extinguishing layer 132 is sprayed into the pin accommodation space 111 of the housing 110. This delays the spread of the flame and the damage to the housing 110 caused by the flame.

### (Fifth embodiment)

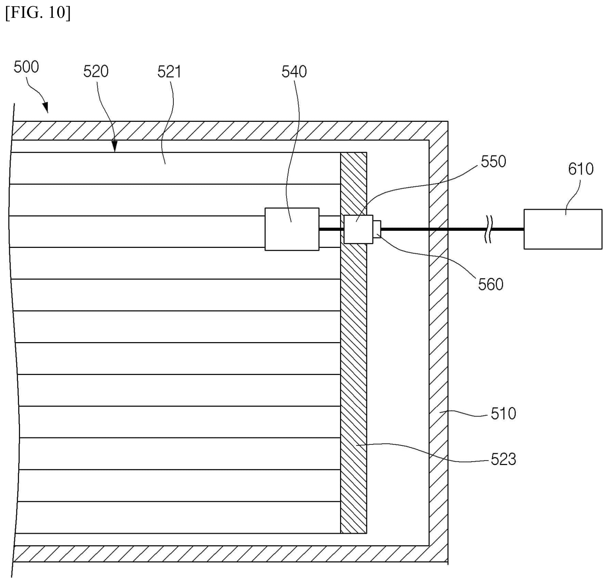

FIG. 10 is a plan view schematically illustrating a battery pack 500 according to exemplary embodiments of the present disclosure.

Referring to FIG. 10, the battery pack 500 may include a pack frame 510, a cell assembly 520, a sensor 540, a first connector 550, and a second connector 560.

The pack frame 510 may provide an internal space for accommodating the cell assembly 520 and various electrical components.

The cell assembly 520 may be disposed within the internal space of the pack frame 510. The cell assembly 520 may include a plurality of battery cells 521 mounted on the pack frame 510 and a frame 523 provided on one side of the plurality of battery cells 521. Each battery cell 521 is a lithium-ion battery, i.e., the basic unit of a secondary battery. Each battery cell 521 may include an electrode assembly, an electrolyte, and a cell case. The electrode assembly embedded within the cell case may include a positive electrode, a negative electrode, and a separator interposed between the positive and negative electrodes. The electrode assembly may be either a jelly-roll type or a stack-type, depending on the assembly form. A jelly-roll type electrode assembly may include a wound structure including a positive electrode, a negative electrode, and a separator interposed between them. A stack-type electrode assembly may include a plurality of positive electrodes, a plurality of negative electrodes, and a plurality of separators interposed between them, stacked sequentially. The positive electrode may include a positive electrode current collector and a positive electrode active material. The negative electrode may include a negative electrode current collector and a negative electrode active material.

A plurality of battery cells 521 may be connected in series and/or in parallel. For example, the plurality of battery cells 521 may be connected in series with each other. For example, multiple battery cells 521 may also be connected in parallel with each other. For example, when defining a set of two or more battery cells 521 connected in parallel as a bank, one bank composed of two or more battery cells 521 connected in parallel and another bank composed of two or more battery cells 521 connected in parallel may be connected in series.

Each battery cell 521 may correspond to a pouch-type battery cell, a cylindrical battery cell, or a prismatic battery cell. The electrode assembly of a pouch-type battery cell is embedded within a pouch cell case containing an aluminum laminate sheet. The electrode assembly of a cylindrical battery cell is embedded within a cylindrical metal can. The electrode assembly of a prismatic battery cell is embedded within a prismatic metal can.

The sensor 540 may be disposed within the pack frame 510. In exemplary embodiments, the sensor 540 may include a fire detection sensor configured to detect the occurrence of a fire within the pack frame 510. The fire detection sensor may include a temperature sensor, a gas sensor, and/or a pressure sensor. The temperature sensor may be configured to detect the temperature within the pack frame 510. The gas sensor may be configured to detect the concentration of a specific gas within the pack frame 510. The pressure sensor may be configured to detect the pressure within the pack frame 510.

The first connector 550 may be electrically connected to the sensor 540 via a connecting member such as a wire harness, and the second connector 560 may be electrically connected to an external device 610 via a connecting member such as a wire harness. The first connector 550 and the second connector 560 may be detachably coupled. When the first connector 550 is coupled to the second connector 560, the conductive pins 120 of the first connector 550 and the conductive pins 120 of the second connector 560 can be electrically connected, and a signal output from the sensor 540 can be transmitted to the external device 610.

In exemplary embodiments, the first connector 550 and the second connector 560 may each correspond to any one of the connectors 100, 100A, 100B, 100C described with reference to FIGS. 1 through 9.

In exemplary embodiments, the external device 610 is an electric vehicle, and the battery pack 500 may be mounted in the electric vehicle. The signal output from the sensor 540 may be transmitted to the control components of the electric vehicle via the first connector 550 and the second connector 560.

When a fire occurs within the battery pack 500, if the connector forming the signal transmission path for transmitting the signal output from the fire detection sensor to the external device 610 is damaged too early, there is a risk that the signal output from the fire detection sensor will not be transmitted to the external device 610, preventing the external device 610 from taking appropriate action in response to the fire in the battery pack 500.

According to exemplary embodiments of the present disclosure, a fire extinguishing agent may be provided within the connector that forms the signal transmission path for transmitting the signal output from the fire detection sensor to the external device 610. When a fire occurs inside the battery pack 500, the fire extinguishing agent provided in the housing of the connector can be sprayed outward, delaying the spread of flames and damage to the housing of the connector caused by the flames, and securing the minimum time required to transmit the signal output from the fire detection sensor to the external device 610.

The present disclosure has been described in detail above with reference to the drawings and embodiments. However, the configurations described in the drawings or embodiments of the present specification are merely one embodiment of the present disclosure and do not represent all of the technical ideas of the present disclosure. Therefore, it should be understood that various equivalents and modifications may be made to the present disclosure at the time of filing this application.

## Claims

1. A connector comprising:
a housing comprising a first cavity, a first nozzle communicating with the first cavity, and a pin accommodation space separated from the first cavity;
a first fire extinguishing layer provided within the first cavity of the housing and containing a fire extinguishing agent;
a first cover closing the first nozzle of the housing; and
a conductive pin accommodated in the pin accommodation space of the housing.

2. The connector of claim 1, wherein
the housing comprises an inner surface facing the conductive pin and an outer surface opposite the inner surface, wherein
the first nozzle of the housing is provided on the outer surface of the housing.

3. The connector of claim 1, wherein
the first nozzle of the housing is provided on an inner surface of the housing facing the conductive pin.

4. The connector of claim 1, wherein
the housing further comprises a second nozzle communicating with the first cavity of the housing, wherein
the first nozzle is provided on an outer surface of the housing, wherein
the second nozzle is provided on an inner surface of the housing, wherein
the connector further comprises a second cover closing the second nozzle of the housing.

5. The connector of claim 1, wherein
the housing comprises a second cavity and a second nozzle communicating with the second cavity, wherein
the first nozzle is provided on an outer surface of the housing, wherein
the second nozzle is provided on an inner surface of the housing, wherein
the connector further comprises:
a second fire extinguishing layer provided within the second cavity of the housing and containing a fire extinguishing agent; and
a second cover closing the second nozzle of the housing.

6. The connector of claim 1, wherein
the housing comprises a through hole communicating with the pin accommodation space, wherein
the conductive pin is inserted into the through hole of the housing.

7. The connector of claim 1, wherein
the housing comprises a flame-retardant material, wherein
the first cover comprises a fire-resistant material.

8. The connector of claim 7, wherein
the first cover comprises fire-resistant silicone.

9. A battery pack comprising:
a pack frame in which battery cells are mounted;
a sensor disposed within the pack frame; and
a connector connected to the sensor, wherein
the connector comprises:
a housing comprising a first cavity, a first nozzle communicating with the first cavity, and a pin accommodation space separated from the first cavity;
a first fire extinguishing layer provided within the first cavity of the housing and containing a fire extinguishing agent;
a first cover closing the first nozzle of the housing; and
a conductive pin accommodated in the pin accommodation space of the housing and configured to electrically connect the sensor to an external device.

10. The battery pack of claim 9, wherein
the sensor comprises a fire detection sensor.

11. The battery pack of claim 9, wherein
the housing comprises an inner surface facing the conductive pin and an outer surface opposite the inner surface, wherein
the first nozzle of the housing is provided on the outer surface of the housing.

12. The battery pack of claim 9, wherein
the first nozzle of the housing is provided on an inner surface of the housing facing the conductive pin.

13. The battery pack of claim 9, wherein
the housing further comprises a second nozzle communicating with the first cavity of the housing, wherein
the first nozzle is provided on an outer surface of the housing, wherein
the second nozzle is provided on an inner surface of the housing, wherein
the connector further comprises a second cover closing the second nozzle of the housing.

14. The battery pack of claim 9, wherein
the housing comprises a second cavity and a second nozzle communicating with the second cavity, wherein
the first nozzle is provided on an outer surface of the housing, wherein
the second nozzle is provided on an inner surface of the housing, wherein
the connector further comprises:
a second fire extinguishing layer provided within the second cavity of the housing and containing a fire extinguishing agent; and
a second cover closing the second nozzle of the housing.

15. The battery pack of claim 9, wherein
the housing comprises a flame-retardant material, wherein
the first cover comprises a fire-resistant material.
